# EUROPEAN PATENT APPLICATION

(11) **EP 1 133 168 A2**
(43) Date of publication of application: **12.09.2001**
(21) Application number: 01300289.4
(22) Date of filing: 15.01.2001
(51) Int. Cl.: H04N 5/235

(54) **Smart exposure determination for imagers**

(30) Priority: 21.01.2000 US 177496 P; 12.10.2000 US 689368
(71) Applicant: Symagery Microsystems Inc., Ottawa, Ontario K2K 2A5 (CA)
(72) Inventor: Roustaei, Alex, La Jolla, California 92037 (US); Vulpoiu, Paul, Ottawa, Ontario, K1V 7R1 (CA)
(74) Representative: Maury, Richard Philip

(57) **Abstract**

A method and a system for operating an imager during image capture of an object under a wide range of ambient light intensities so as to provide a controlled output image signal for image recognition. The imager includes an imaging circuit having an imaging array on a die and light detectors also located on the die adjacent to the imaging array for sensing the intensity of the illumination on the object and generating signals representing the intensity of the illumination sensed at each detector. These signals are used to adjust the exposure time of the imaging array, the light source that illuminates the object and/or the gain of the imager output amplifier. The signals may also be used to determine alignment of the imaging array with respect to the object, which may be a two-dimensional bar code.

## Description

### Field of the Invention

The present invention relates to the field of image scanning devices and in particular to scanning devices operating under a wide range of ambient light intensity.

### Background of the Invention

In the imaging industry, scanners are expected to operate effectively under a wide range of ambient light. A number of solutions have been developed wherein ambient light is measured in order to control the scanning system. The sensing of ambient light may be done by an ambient light detection circuit which is separate from the imaging array, or ambient light can be detected through the use of the imaging array itself. The ambient light measurement is then used either to adjust the exposure time of the imaging array/lens, to set the gain of the image signal or to control the brightness of a light source.

U. S. Patent 4,970,379 which issued on November 13, 1990 to Danstrom discloses exposure/illumination control for a bar code scanner consisting of a controllable light source and an optical sensor that is independent of the scanner array. The optical sensor converts the light reflecting from the object to be scanned into an electrical signal representative of the ambient light. This signal is coupled to a comparator which determines the illumination required by the scanner array and then adjusts the power to the controllable light source accordingly. A major drawback of this method is that during low light conditions the light source will be driven by the comparator to generate bright illumination which consumes a large amount of power. In a hand held device this is extremely detrimental, as most hand held devices have a self-contained power supply.

Other systems use the imaging array itself to determine ambient light levels which is then used to control exposure time. U.S. Pat. 4,471,228 which issued on September 11, 1984 to Nishizawa et al describes an image sensor consisting of non-destructive readout-type image cells, the sensor uses the array of image cells as both photo-detector cells for the measurement of ambient light and as image capturing cells for imaging an object.
The imaging array is exposed to the object and an ambient light measurement run is made through previously selected imaging cells. The added value of the selected imaging cells is compared to a reference value to determine the exposure level required. The selected imaging cells are then erased, and an image scan of the object is performed with a controlled exposure time.

The shortcoming of this method is that it consists of too many steps. The process is slowed down by the multi-step process of using the array to measure ambient light and then forcing the array to be reset before the image is scanned. Additionally, the extra step requires an extra expenditure of power, which is a severe detriment in a hand-held device.

U.S. Patent 4,338,514 which issued on July 6, 1982 to Bixby discloses a further method of controlling exposure time by operating a mechanical shutter in response to radiant energy impinging on the sensor array. The semiconductor array substrate current is monitored during the exposure of the imaging array to produce an integrated signal that is proportional to the exposure level of the array. The signal is compared to a threshold voltage and when it exceeds a threshold value the shutter is closed.

There are drawbacks to this method in that it requires additional processing steps in order to create an apparatus to monitor the substrate current. Specifically, the apparatus requires the addition of a layer of conductive material between the nonconductive base-plate and the semi-conductive substrate. While this type of process is typical in some CCD imagers, it would be a costly addition in a CMOS imager.

A further system in which exposure time is adjusted is described in U.S. Patent 5,986,705 which issued on November 16, 1999 to Shibuya et al. A video camera is described having an image sensing device, an exposure adjustment apparatus which controls the gain of an amplifier to adjust the scanned output signal and further controls a drive pulse generator to control the exposure time of sensing device. In one embodiment, the video camera controls exposure by capturing an image with the image sensing device, amplifying the output signal which is driven externally as well as being fed back into the exposure adjustment apparatus where the signal is compared to a reference. When the comparison indicates that the image is either overexposed, underexposed or without need of adjustment, control signals are sent to the drive pulse generator to adjust exposure time and to the amplifier to adjust the gain of the amplifier.

This method has several disadvantages, its iterative style of exposure control is only advantageous for a video camera. Controlling only exposure time and signal gain is limiting in terms of the range of light intensity under which the device would remain useful. Still cameras, bar code readers and the like, would not find such a method useful as it would require additional circuitry to filter out the overexposed and underexposed images. Low-light conditions would be difficult for the device to image as it has no control over an external light source.

While each of the adjustment methods has its merits, the adjustment methods are inherently limited by the range of light intensity in which they can operate and in the type of device to which they may be applied.

Therefore, there is a need for scanning devices that can operate under a wide range of ambient light intensity and maintain a high quality of image capture.

### Summary of the Invention

This invention is directed to a method and a system for maintaining the output signal of an imager at a predetermined operable level during the image capture of an object. This invention comprises sensing the intensity of the illumination on the object, storing a signal representative of the illumination intensity, sampling the representative signal and controlling the output signal as a function of the sampled representative signal.

In accordance with another aspect of the present invention, the output signal may be controlled as a function of the sampled representative signal by comparison to a look-up table having a variety of control signal levels as a function of light intensity, exposure timing and amplifier gain.

With regard to a further aspect of this invention, the output signal may be maintained by adjusting the exposure time of the imaging array, adjusting the intensity of the illumination on the object and/or adjusting the amplification of the output signal.

In accordance with another aspect of this invention, the intensity of the illumination on the object may be sensed from two or more sides of the imaging array by light detectors which are integrated on the imaging array die. These detectors may be used to repetitively sense the illumination on the object.

With respect to a further aspect of the present invention, the imager comprises a light source for illuminating the object to be imaged; the source may include one or more LED's positioned about the scanning array, preferably at the corners of the array. The imager further includes light detectors which may include one or more photodiode/ integrator circuit combinations located along one or more sides of the imaging array.

In accordance with a further aspect of this invention, alignment of the imaging array with the object may be determined by individually sensing the intensity of the illumination on the object from a number of position on at least two sides of the imaging array, comparing the signal representative of the illumination intensity from each of the positions to a signal representative of the outside edge of the object, and moving the imaging array over the object until the representative signals from all of the positions are substantially equal to the representative signal of the outer edge of the object as an indication of alignment. A further method of controlling proper image alignment comprises individually sensing the intensity of the illumination on the object from a number of position on at least two sides of the imaging array, comparing the signal representative of the illumination intensity from each of the positions to a signal representative of the outside edge of the object, and isolating portions of the imaging array that contains the object as a function of the relative signal levels. These alignment processes are particularly useful with image recognition processes for imaged bar codes.

Other aspects and advantages of the invention, as well as the structure and operation of various embodiments of the invention, will become apparent to those ordinarily skilled in the art upon review of the following description of the invention in conjunction with the accompanying drawings.

### Brief Description of the Drawings

The invention will be described with reference to the accompanying drawings, wherein:
Figure 1 illustrates an embodiment of an imager with an imaging array and light detection circuits in accordance with the present invention;
Figure 2 illustrates an arrangement of light detection circuits about an imaging array;
Figure 3 illustrates a photodiode light detection circuit which may be used with the present invention;
Figure 4 is an arrangement of elements as seen from the scanner face;
Figure 5 is a block diagram of a further embodiment of an imager with an image array and light detection circuits; and
Figure 6 is a block diagram of a controlled photodiode light detection circuit.

### Detailed Description of the Invention

CMOS image sensors are comprised of an array of light sensitive pixels integrated on a die. After the pixels have been reset, the signal generated by each pixel is proportional to the amount of charge collected by the pixel during an exposure or integration period. The amount of light present when an image is being captured by the image sensor can greatly influence the quality of the captured image which is particularly important when the captured image is being used for image recognition in instances such as for bar code reading. The amount of light present when an image is being captured may also influence the amount of amplification that the image signals require as they are being processed for image recognition.

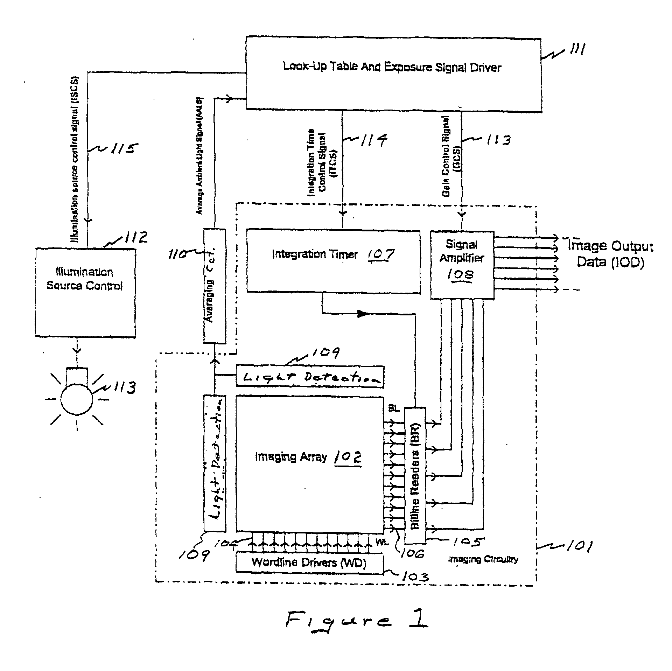

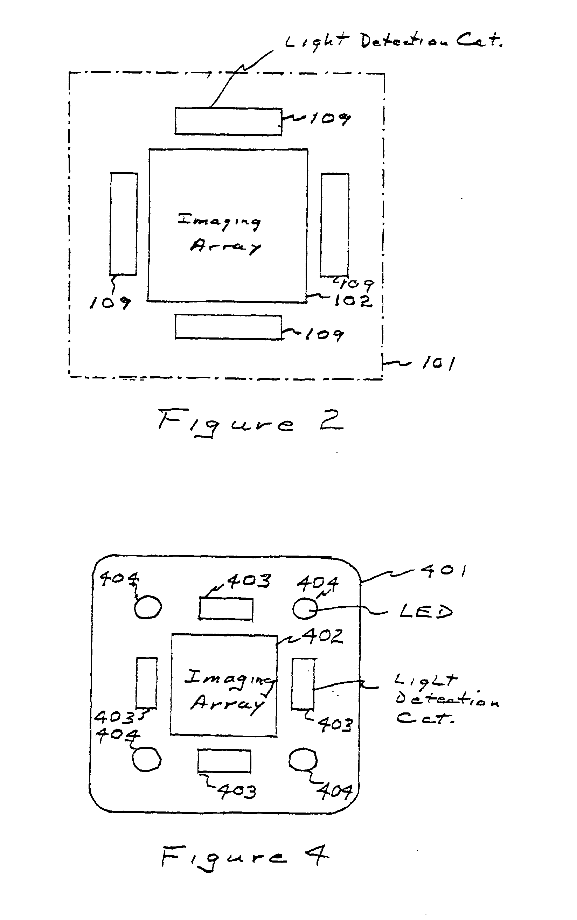

Figure 1 illustrates the use of the present invention with a typical imaging circuit 101 which is located on a wafer or die represented by broken lines, The imaging circuit 101 normally includes an imaging array 102, wordline drivers 103 and wordlines 104, bitline readers 105 and bitlines 106, an integration timer 107, and a signal amplifier 108. The bitline readers 105 are connected to the signal amplifier 108 which amplifies the bitline reader 105 signals to produce the image output data. Further in accordance with the present invention, light detector circuits 109 are also located on the die 101 adjacent the imaging array 102. Though, the light detector circuits 109 are shown as being on two sides of the array 102, they may be located on all four sides of the array 102 as illustrated in figure 2, or even on one or three sides of the array.

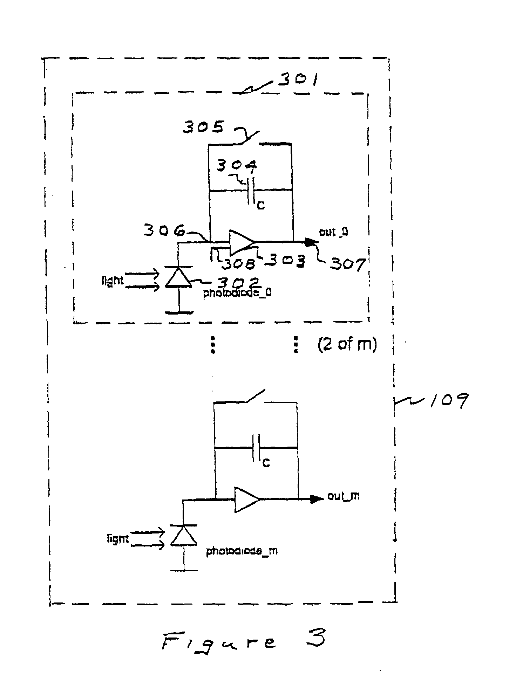

Figure 3 illustrates an example of a light detection circuit 109 that may be used in accordance with the present invention. Light detection circuit 109 includes one or more light detectors 301 each consisting of a p-n photodiode 302 (hereinafter referred to as a photodiode), an op-amp 303, a capacitor 304 and a reset switch 305. If a number of light detectors 301 are used in each light detection circuit 109, they may be positioned in a row along the side of the imaging array 102. Generally, the control process for the light detectors 301 has the following steps. The reset switches 305 are held closed until their corresponding photodiodes 302 are to be read. The photodiodes 302 may all be read simultaneously, however in the present embodiment the photodiodes 302 are sequentially read one at a time. When a photodiode 302 is to be read the reset switch 305 is held open for a specified time so that the charge related to the ambient light can accumulate in the capacitor 304. The op-amp 303 integrates the charge across the capacitor 304, which is coupled between its inverting input terminal 306 and its output 307. The non-inverting input terminal 308 is connected to a reference voltage.

The use of a p-n photodiode in the description of this embodiment is only illustrative, any type of semiconductor light sensitive device could be used in light detectors 301, such as a p-i-n photodiode or a Schottky photodiode.

This process for detecting light level can be very rapid, thus allowing several cycles of light detection to be repeated during one cycle of image scanning by the imaging array 102.

Referring back to figure 1, the imaging circuitry 101 on the die may further include an averaging circuit 110, a look-up table and signal driver 111 and an illumination source control 112. The signal driver 111 includes output lines 113 to 115 respectively for signals to control the signal amplifier 108, the integration timer 107 and the illumination source control 112. The illumination source control 112 is adapted to control an light source 113 which itself would not be located on the die. In addition, components 110, 111 and 112 may not necessarily be located on the imaging circuitry die 101 as this will not affect the operation of the invention.

The operation of the imaging circuitry 101 follows. During the light detection portion of the image acquisition cycle, the light detection circuits 109 are allowed to accumulate electric charge generated from the impact of light on their photodiodes 302 or on other such light sensitive device. As the light detection circuit 109 is read, the voltage is transferred to an averaging circuit 110 which produces a signal or plurality of signals representative of average ambient light; these signals are transferred to the look-up table and signal driver 111. The look-up table and signal driver 111 acts as a comparator, comparing the signals to an internal table of values for illumination, integration time, and signal gain corresponding to particular ambient light conditions.

The look-up table and signal driver comprises a microcontroller device such as the Strong Arm SA1110, consisting of inputs for receiving information, outputs for driving external signals and a read-only memory. The read-only memory contains a software program that includes data relating to particular imaging needs in terms of light intensity, integration time and signal gain in response to a measured level of ambient light. The data mix contained therein would depend on the type of application that the device is to be used; for example, a bar code reader would rely mostly on the adjustment of the integration time as this would be the power conscious method of acquiring a viable output signal.

Once the look-up table and the signal driver 111 determines the proper values for the illumination source control signal, the integration time control signal and the gain control signal, these signals are fed to the illumination source control 112, the integration timer 107 and the signal amplifier 108 to adjust the brightness of the light source 113, the exposure time of the imaging array 102 and the gain of the amplifier 108 respectively.

The light source 113 may consist of any type of conventional light source that can be controlled in intensity. However, a particularly advantageous arrangement is illustrated in figure 4 which schematically illustrates the face of a scanner 401. The imaging array 402 is located at the center of the scanner face 401, it has one or more light detectors 403 on one or more sides of the imaging array 402. In addition, one or more LED light sources 404 are positioned about the imaging array 402 to provide further lighting if required. In operation, the one or more LED's 404 may each be controlled by a separate line in order to turn each LED 404 OFF or ON as desired. For example, if an object or target is close to the scanner face 401, only one or two LED's might be turned ON; with the target a little further away, such as five or six inches, possibly three or four LED's 404 could be turned ON. Alternately, the driving current to each LED 404 could be controlled by the illumination source controller 112 to increase or decrease the illumination from each LED 404 as required.

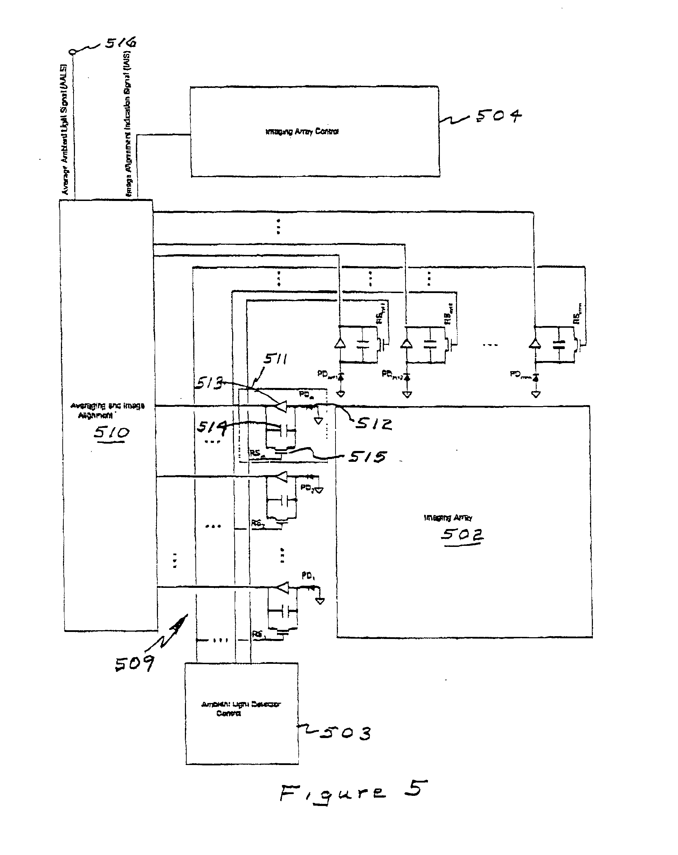

With reference to figure 5, another embodiment of the invention using ambient light detectors located on the same die as an imaging array will be described. The dual purpose of this embodiment is to measure ambient light conditions on an object being imaged and to align the imaging array with the object being imaged.

After the measurement of the appropriate exposure settings, as outlined in the previous embodiment, the imaging array 502 must be aligned to the object to be imaged, in the case of, for example, two-dimensional bar codes. This is accomplished by detecting the white space surrounding said bar code with the light detection circuit 509 surrounding the imaging array 502. The detection circuit 509 includes a plurality of light detectors 511, each including a photodiode 512, a reset switch 515, a capacitor 514 and an op-amp 513 which operate similarly to the light detectors 301 described with respect to figure 3.

The ambient light detector control 503 is constructed to issue reset switch 515 commands to each of the light detectors 511. The light detectors 511 are held at reset until a measurement of ambient light is required.

The ambient light detector control 503 allows the reading of individual light detectors 511 in sequence. In figure 5, light detectors 511 are being read starting at the bottom left and proceeding upward and then to the right. In this particular embodiment, there are 8 light detectors 511 in a row to the left of the imaging array 502 and 8 further light detectors 511 in a row at the top of the imaging array 502. For simplicity, the light detectors 511 may be read in the order indicated above, however they may also be read in any order, as those skilled in the art will recognize, the order in which they are read can be varied significantly while yielding the same result.

The averaging and image alignment circuit 510 collects the data gathered from the ambient light detectors 511, and performs two functions. The first is to determine alignment and the second is to average the light intensity signals. Alignment may be done by comparing the data to a value consistent with the background color. The comparison is repeated for the outputs of every light detector 511 until all are found to be consistent with the background color. This is achieved by moving and adjusting the scanner face 401 over the target. At this point, the averaging and image alignment circuit 510 outputs an image alignment indication signal to the image array control 504 which indicates that the image is ready to be captured.

Alignment determination can also be performed in another way. The data can be compared to a value consistent with the background color. The comparison is repeated for the outputs of every light detector 511 until all have been examined. This data would then be communicated to a microcontroller for the purpose of selecting only a portion of interest from the object to be imaged. The microcontroller then, using this data relative to the positions of the detectors in relation to the imaging array 502, isolates the portions of the array 502 that can image the object of interest. The microcontroller then communicates to the imaging circuitry which portions of the array 502 to activate for the image acquisition cycle.

After these functions have been performed, the image array control 504 then causes the imaging array 502 to capture an image of the object or target in question. The process by which the imaging array 502 captures an image is well known in the art and hence will not be explained further here. As with respect to the system described with respect to figure 1, the average ambient light signal 516 is directed to a look-up table and signal driver 111 which compares it to an internal table of values for illumination, integration time, and signal gain corresponding to particular measured ambient light conditions.

The look-up table and signal driver 111 determines the proper values for the illumination source control signal, the integration time control signal and the gain control signal, and outputs those signals to the illumination source control 112, to the integration timer 107 and to the signal amplifier 108 respectively which are also similar to those components as illustrated and described with respect to figure 1.

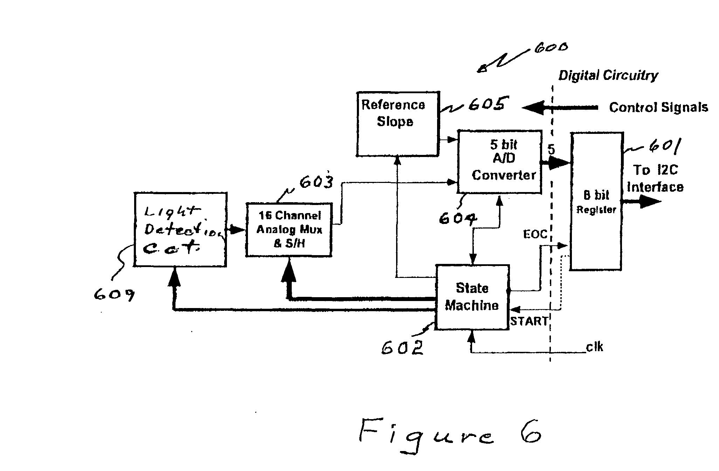

An example of a controlled photodiode light detection circuit 600 of the type which may be used in the system described with respect to figure 1 or 5 is illustrated in figure 6. The controlled photodiode light detection circuit 600 includes a number of light detection circuit 609 which as described with respect to figure 5 may include 8 light detectors located in a row above the imaging array and 8 further light detectors located in a row along one side of the imaging array 502. Each light detector comprises a photodiode and an integrator circuit.

The controlled photodiode light detection circuit 600 further includes a state machine 602 which supervises the functionality of all of the blocks generating logic signals to control the timing of the controlled photodiode light detection circuit 600. A 16 channel analog multiplexer and sample/hold circuit 603 receives the outputs of the 16 light detectors in the light detection circuit 609 and applies them to a 5 bit analog to digital convener 604 which consists of a comparator and a 5 bit counter in a typical single slope-A/D converter structure. A reference slope circuit 605 generates a slope voltage that is selected by the state machine 602. Finally, the controlled photodiode light detection circuit 600 uses a data register 601 which comprises an 8 bit write/read register and which is used as a buffer to a I2C Interface with the look-up table and signal driver 111.

By positioning the light detector circuits on the die adjacent to the imaging array, and by providing the versatility of control of the light source, the exposure timing and/or the amplifier gain, the present invention provides a system capable of operating within a wide range of light intensities, from very low-light conditions to very bright conditions. The present invention further has the advantage that it is able to measure the ambient lighting conditions from near the imaging array and has a low power consumption. The system in accordance with the present invention is further capable of detecting alignment of the image array with an object, thereby controlling the image array to produce an image that is conducive to image recognition.

In addition, since the light detectors are integrated on the same die as the imaging array but function independently from the array, a signal representative of the ambient light at one location or another is always available for the control of the light source, the exposure time and or the amplifier gain at any time during the image scanning process. With light detectors located on opposite sides of the imaging array, ambient light can be detected for specific sides of the imaging array.

By using a number of LED's that can be controlled individually, substantial power savings can be made by placing ON the minimum number of diodes required and by varying the intensity of the LED's that are ON.

While the invention has been described according to what is presently considered to be the most practical and preferred embodiments, it must be understood that the invention is not limited to the disclosed embodiments. Those ordinarily skilled in the art will understand that various modifications and equivalent structures and functions may be made without departing from the spirit and scope of the invention as defined in the claims. Therefore, the invention as defined in the claims must be accorded the broadest possible interpretation so as to encompass all such modifications and equivalent structures and functions.

## Claims

1. A method of maintaining the output signal of an imager having an imaging array at a predetermined operable level during the image capture of an object comprising the steps of:
a. sensing the intensity of the illumination on the object;
b. storing a signal representative of the illumination intensity;
c. sampling the representative signal;
d. controlling the output signal as a function of the sampled representative signal.

2. A method of maintaining the output signal of an imager having an imaging array at a predetermined operable level during the image capture of an object as claimed in claim 1 wherein step (a.) includes sensing the intensity of the illumination on the object from two or more sides of the imaging array.

3. A method of maintaining the output signal of an imager having an imaging array at a predetermined operable level during the image capture of an object as claimed in claim 1 wherein step (a.) includes repetitively sensing the intensity of the illumination on the object.

4. A method of maintaining the output signal of an imager having an imaging array at a predetermined operable level during the image capture of an object as claimed in claim 1 wherein step (d.) includes adjusting the exposure time of the imaging array to the object.

5. A method of maintaining the output signal of an imager having an imaging array at a predetermined operable level during the image capture of an object as claimed in claim 1 wherein step (d.) includes adjusting the intensity of the illumination on the object.

6. A method of maintaining the output signal of an imager having an imaging array at a predetermined operable level during the image capture of an object as claimed in claim 1 wherein step (d.) includes adjusting the amplification of the output signal.

7. A method of maintaining the output signal of an imager having an imaging array at a predetermined operable level during the image capture of an object as claimed in claim 4 wherein step (d.) further includes adjusting the intensity of the illumination on the object.

8. A method of maintaining the output signal of an imager having an imaging array at a predetermined operable level during the image capture of an object as claimed in claim 7 wherein step (d.) further includes adjusting the amplification of the output signal.

9. A method of maintaining the output signal of an imager having an imaging array at a predetermined operable level during the image capture of an object as claimed in claim 1 wherein step (c.) includes comparing the representative signal to signal levels in a look-up table.

10. A method of controlling proper image alignment with an imaging array in an imager comprising the steps of:
a. individually sensing the intensity of the illumination on the object from a number of position on at least two sides of the imaging array;
b. comparing a signal representative of the illumination intensity from each of the positions to a signal representative of the outside edge of the object; and
c. moving the imaging array over the object until the representative signals from all of the positions are substantially equal to the representative signal of the outer edge of the object as an indication of alignment.

11. A method of controlling proper image alignment as claimed in claim 10 wherein the object is a two-dimensional bar code.

12. A method of controlling proper image alignment with an imaging array in an imager comprising the steps of:
a. individually sensing the intensity of the illumination on the object from a number of position on at least two sides of the imaging array;
b. comparing a signal representative of the illumination intensity from each of the positions to a signal representative of the outside edge of the object; and
c. isolating portions of the imaging array that contains the object.

13. A method of controlling proper image alignment as claimed in claim 12 wherein the object is a two-dimensional bar code.

14. A system for controlling the output signal during image capture of an object by an imager having an imaging array on a die comprising;
- light detection means located on the die adjacent to the imaging array for sensing the intensity of the illumination on the object;
- means for generating an electrical signal representative of the intensity of the illumination;
- means for sampling the representative electrical signal; and
- means for controlling the output signal as a function of the sampled representative signal.

15. A system for controlling the output signal during image capture of an object by an imager having an imaging array on a die as claimed in claim 14 wherein the light detection means is located on two or more sides of the imaging array.

16. A system for controlling the output signal during image capture of an object by an imager having an imaging array on a die as claimed in claim 15 wherein the light detection means comprises at least one light detector having a photodiode and an integrator circuit.

17. A system for controlling the output signal during image capture of an object by an imager having an imaging array on a die as claimed in claim 14 wherein the electrical signal generating means comprises an averaging circuit.

18. A system for controlling the output signal during image capture of an object by an imager having an imaging array on a die as claimed in claim 14 wherein the means for controlling the output signal as a function of the sampled representative signal comprises a look-up table having a variety of control signal levels as a function of light intensity and a signal driver to control the output signal.

19. A system for controlling the output signal during image capture of an object by an imager having an imaging array on a die as claimed in claim 18 comprising integrator timer means coupled to the signal driver to control the exposure time of the imaging array to the object illumination.

20. A system for controlling the output signal during image capture of an object by an imager having an imaging array on a die as claimed in claim 18 comprising illumination source control means coupled to the signal driver to control the illumination intensity.

21. A system for controlling the output signal during image capture of an object by an imager having an imaging array on a die as claimed in claim 18 comprising amplifier gain control means coupled to the signal driver to control the amplification of the output signal.

22. A system for controlling the output signal during image capture of an object by an imager having an imaging array on a die as claimed in claim 19 comprising illumination source control means coupled to the signal driver to control the illumination intensity.

23. A system for controlling the output signal during image capture of an object by an imager having an imaging array on a die as claimed in claim 22 comprising amplifier gain control means coupled to the signal driver to control the amplification of the output signal.

24. A system for controlling the output signal during image capture of an object by an imager having an imaging array on a die as claimed in claim 14 comprising a light source for illuminating the object to be imaged.

25. A system for controlling the output signal during image capture of an object by an imager having an imaging array on a die as claimed in claim 24 in which the light source comprises one or more LED's positioned about the scanning array.

26. A system for controlling the output signal during image capture of an object by an imager having an imaging array on a die as claimed in claim 15 comprising a light source for illuminating the object to be imaged.

27. A system for controlling the output signal during image capture of an object by an imager having an imaging array on a die as claimed in claim 26 in which the light source comprises at least one LED positioned at one or more corners of the scanning array.

28. A system for controlling the output signal during image capture of an object by an imager having an imaging array on a die as claimed in claim 14 wherein the light detection means comprises at least one light detector having a photodiode and an integrator circuit.
